# EUROPEAN PATENT SPECIFICATION

(11) **EP 0 788 519 B1**
(45) Date of publication and mention of the grant of the patent: **04.09.2002**
(21) Application number: 95918414.4
(22) Date of filing: 05.05.1995
(51) Int. Cl.: C08F 10/00, C08F 4/22, C08F 4/02

(54) **HIGH PORE VOLUME POLYOLEFIN CATALYST**
POLYOLEFINKATALYSATOR MIT GROSSEM PORENVOLUMEN
CATALYSEURS DE POLYOLEFINES A VOLUME ELEVE DES PORES

(30) Priority: 02.06.1994 US 252852
(43) Date of publication of application: 13.08.1997
(73) Proprietor: W.R. GRACE & CO.-CONN., New York New York 10036 (US)
(72) Inventor: GLEMZA, Rimantas, Baltimore, MD 21228 (US); DENTON, Dean, A., Baltimore, MD 21229 (US)
(74) Representative: Senior, Alan Murray
(86) International application number: US9505699
(87) International publication number: WO95033778

(56) References cited:
- FR-A- 2 111 169

## Description

### Background of the Invention

In the field of manufacture of polyolefins (e.g. polyethylene), much attention has been devoted to finding new and improved catalysts capable of producing olefin polymers having improved properties.

For many applications, it is desirable to produce polyolefins having high melt flow index property. In the past, it has been found that high melt index was not achievable by use of simple chromium-silica catalysts. Therefore, producers of polyolefins turned to the use of titanium-containing catalysts such as Ti-Cr-silica tergel or Ziegler-Natta catalysts. These alternatives to chromium-silica catalysts are generally more expensive than chromium-silica catalysts. Further, Ziegler catalysts are often difficult to obtain in a supported form. Also, Ziegler catalysts can result in the introduction of undesirable amounts of chlorine (and other constituents) into the polyolefin.

Attempts have been made to increase the melt index obtainable using chromium silica catalysts by use of high pore volume silica gels or by adding other substances to the gel such as phosphorus-containing additives. The success of these attempts has been very limited. Accordingly, there remains a need for alternative catalysts capable of producing high melt index polyolefins without the above-mentioned disadvantages.

FR-A-2111169 describes a method for the preparation of olefin polymerisation catalysts in which a hydrogel is prepared by adding an aqueous solution of an alkaline metal silicate to a solution of a strong acid or a weak acid, preferably under suitable conditions of agitation. The hydrogel which is formed usually contains between 3 and 12 w.% of SiO₂ and usually has a pH in the range 3 to 9. The hydrogel is aged, washed and then water is removed to produce a silica zero gel having a surface area of 200 to 500 m² per gram, a pore size of 200 to 600 Å, a pore volume of 1.8 to 3.5 cc per gram as determined by nitrogen absorption. The zero gel is impregnated with a chromium oxide or chromium compound. On calcination the resulting composition may be employed as a catalyst for olefin polymerisation.

### Summary of the Invention

The invention provides new chromium silica catalysts which are capable of achieving high melt index polyolefins without the use of titanium or other additives. The catalysts of the invention are capable of achieving melt index in excess of 4.0 as measured by ASTM D1238-79, Condition E, Procedure B. The invention also encompasses methods for making the catalysts of the invention.

The invention encompasses a process for manufacture of a chromium-containing silica catalyst, the process comprising sequentially the following steps;
(a) combining an alkali metal silicate solution and a mineral acid to form a mixture having pH of 6-10 and a silica content of 16-21 wt.% and maintaining the mixture at a temperature of 10-20°C,
(b) forming the mixture into gelled beads within 3 seconds from when the mixture is formed,
(c) washing the gelled beads in an aqueous bath at pH = 3-6 for 15-30 hours,
(d) aging the beads in an alkaline bath of pH = 8-10 for 5-25 hours.
(e) immersing the washed aged beads in an organic solvent suitable for azeotropic distillation and removing water from the beads by azeotropic distillation,
(f) drying the beads.

A chromium compound is added to the mixture to be gelled, to the gelled beads before or during step (e) or to the dried beads. Preferably, the beads are formed by ejecting the mixture into air. The beads preferably gel instantaneously when they are formed. Gelation may take place in the air. The dried beads may be activated by calcination.

In one aspect, the invention encompasses catalyst compositions obtainable by this process and suitable for polymerization of olefins wherein the catalysts comprise:
(a) an amorphous silica gel support having a pore volume of 1.9-2.9 cc/g, a surface area of 250-900 m²/g, and at least 95% of the surface area is in pores have a pore size between 150-450 Å, and
(b) a chromium compound,
wherein the catalyst, when activated at a temperature of 816°C (1500°F), is capable of yielding a polyethylene having (1) a melt flow index of at least 4.0 in a slurry polymerization process carried out at 109°C and under a pressure of 3729kPa (550 psig) wherein the catalyst composition is the only catalyst employed, the melt flow index being determined by ASTM D1238-79, Condition E, Procedure B.

These and other aspects of the invention are described in further detail below.

### Detailed Description of the Invention

The invention encompasses the discovery that certain silica gels when used in chromium silica catalysts result in a capability of producing high melt index polyolefins. The invention further encompasses the discovery of processes for making these chromium silica catalysts.

The silicas useful in the invention are characterized by a combination of high pore volume, moderately high average pore diameter and narrow pore size distribution. The silicas of the invention are believed to be primarily produced by instantaneous gelation processes, and more particularly by so-called bead gel processes.

The silica gels and chromium silica catalysts of the invention have a pore volume of at least 1.9-2.9 cc/g, preferably 2.2-2.7 cc/g. The gels and catalysts are further characterized by an average pore size of preferably 200-500 Å, more preferably 250-500 Å, even more preferably 250-350 Å. The silica gels and resulting catalysts have a pore size distribution wherein at least 95% of total surface area in pores 150-450 Å range where the pore size distribution is measured by Nitrogen Desorption (BET) Method.

The catalysts comprise chromium and silica. The catalysts may contain other additives, however the catalysts preferably consist essentially of chromium and silica. In any event, the catalysts preferably do not contain titanium.

The chromium silica catalysts of the invention contains any catalytically effective amount of chromium. Preferably, the amount of chromium is 0.1-2.0 wt.% based on the total weight of the catalyst, more preferably 0.4-2.0 wt.%, even more preferably 0.5-1.3 wt.%. The average particle size of the catalyst is preferably 30-300 microns, more preferably 80-150 microns.

The catalysts are further characterized by their ability to achieve a melt flow index of at least 4.0, more preferably 5-7 as measured by ASTM D1238-79, Condition E, Procedure B. The above mentioned properties are measured with respect to polymerization of ethylene in a slurry polymerization process carried out at 109°C and a pressure of 3729 kPa (550 psig).

The chromium silica catalysts of the invention are obtainable using a modified bead gel process. The process comprises:
(a) combining an alkali metal silicate solution and a mineral acid to form a mixture having pH of 6-10 and a silica content of 16-21 wt.% and maintaining the mixture at a temperature of 10-20°C,
(b) forming the mixture into gelled beads within 3 seconds from when the mixture is formed,
(c) washing the gelled beads in an aqueous bath at pH = 3-6 for 15-30 hours,
(d) aging the beads in an alkaline bath of pH = 8-10 for 5-25 hours,
(e) immersing the washed aged beads in an organic solvent suitable for azeotropic distillation and removing water from the beads by azeotropic distillation, and
(f) drying the beads.

A chromium compound is added to the mixture to be gelled, to the gelled beads before or during step (e), or to the dried beads.

The alkali silicate is preferably a sodium silicate. The alkali silicate solution preferably has a concentration of 22-26° Baume (Bé) (specific gravity of 1.18 to 1.22). The mineral acid is preferably sulfuric acid. The acid preferably has a concentration of 16-19°Bé (specific gravity of 1.12 to 1.15). The silicate and acid are preferably combined in proportions to yield a mixture containing 18-21 wt.% silica and a pH of 6-10.

The silicate and the acid are preferably maintained at a relatively cool temperature prior to mixing. Preferably the temperature is kept at 10-20°C. Since the mixture will tend to gel rapidly, in-line mixing techniques such as those described in U.S. Patent 3,872,217 or Japanese Patent 48-13834 are preferably used to form the beads. The gelation preferably occurs within 3 seconds from when the mixture is formed, more preferably within 0.5 seconds.

The gelled beads are then collected as they fall in an aqueous bath. The bath preferably has a pH of 2-6. Preferably, the bath contains sulfuric acid. The soak time in the bath is 10-60 minutes. The beads are then washed in an acid wash (pH=3-6) for 15-30 hours, preferably about 20 hours. The washed beads are then ammonia aged at pH of 8-10 for 5-25 hours, preferably 6-20 hours. The end level of Na₂O in the beads is preferably less then 0.1 wt.%, more preferably less than 0.05 wt.%.

The washed beads are then treated to remove the water from the pores. Preferably, water removal is accomplished by azeotropic distillation. Where the water is removed by azeotropic distillation, the hydrogel is simply combined with an organic solvent suitable for azeotropic distillation, such as an alcohol e.g. hexanol. The distillation is preferably conducted at 95°C-170°C.

The distillation is typically performed until all the water is removed from the gel. The resulting xerogel can then be dried and calcined to remove the organic solvent. Preferably, the drying is performed at 170-250°C.

The addition of chromium to the silica gel may be performed at one or more places in the above process. For example, the chromium can be added to the silica hydrogel before water removal using an aqueous solution of a chromium compound. The chromium can also be added during the azeotropic distillation. The chromium can also be added by post-impregnation of the calcined silica gel. The method of chromium addition is not believed to be critical to the results of the invention. Conventional chromium compounds such as chromium acetate, chromium acetyl acetonate or chromium nitrate may be used. The chromium-containing catalyst may be calcined as appropriate to achieve an activated catalyst.

The catalysts of the invention are believed to be suitable for a variety of polymerisation reactions. The catalysts are especially useful for the production of polyethylene. The utility of the catalyst of the invention is not limited to any specific polymerization technique.

The invention is further illustrated by the examples below. It should be understood that the invention is not limited to the specific details of the examples.

### Example 1

A solution of sodium silicate (25° Bé @ 60°F [specific gravity of 1.21 at 15.5°C]) and solution of sulfuric acid [specific gravity of 1.14 at 15.5°C] (17.5° Bé @ 60°F) were cooled to below 60°F (15°C).

The solutions were mixed in an in-line mixer and immediately ejected into the air to form beads. The mixture had a silica content of about 18 wt.% and a pH of about 9.0. In the process of exiting the mixer and falling through the air, the gelation occurs (typically about one second). The gelled beads were then caught in a bath having pH = 4.0.

The beads were then transferred to a soaking tank where they were washed with dilute acid for 20 hours. The washed beads were then aged in an ammonium-containing solution (pH = 8) at 60°C (140°F) for about 5 hours. The beads were then recovered and contacted with hexanol in a vessel connected to an azeotropic distillation apparatus. The hexanol-bead mixture was then heated to about 170°C to remove the water from the beads by azeotropic distillation. The resulting beads were then vacuum dried at 150°C and calcined at 649°C (1200°F). The calcined beads were then impregnated with a chromium acetate-alcohol-water mixture to place about 1 wt.% Cr on the silica gel. The Cr-containing silica was then dried and calcined. The resulting catalyst had a surface area of 307 m²/g and a pore volume of 2.22 cc/g, both measured by nitrogen BET method.

### Example 2

Silica gel beads were prepared in the same manner as in Example 1 except that the chromium solution was added to the hexanol-bead mixture just prior to azeotropic distillation. The resulting catalyst had a surface area of 310 m²/g and a pore volume of 2.55 cc/g, both measured by nitrogen BET method.

### Example 3

The performance of the catalysts resulting from Examples 1 and 2 was then tested.

About 30 cc of each catalyst were fluidized in a special quartz tube (4.5 cm in Diameter), which had a sintered frit to support the sample. The fluidizing medium (air) passed through beds containing activated alumina so that the moisture content corresponded to Dew Point of less than -73°C (- 100°F). This fluidized bed was heated at the rate of 400°C/hr to final temperatures indicated in Table I; 816°C and 871°C, 1500 and 1600°F degrees Fahrenheit. This catalyst activating process continued for 5 hours at 816°C and 871°C (1500°F and 1600°F). At the end the given period, the quartz tube with the sample was cooled to ambient temperature and the activated catalyst was transferred to a glass container for storage. All handling of the activated material was done under nitrogen.

Evaluation of the activated catalysts for type of polyethylene produced during polymerization was done at either 103 or 109°C in a two-liter stirred autoclave. The temperature was controlled and held constant to within 0.5°C by adjusting the pressure of boiling methanol in the jacket surrounding the reactor. After the autoclave was filled with nitrogen and heated to about 102°C, about 0.05 gm of activated catalyst was transferred under nitrogen blanket into the autoclave, followed by about one liter of liquid isobutane. The isobutane was prepurified by passing it through beds containing activated charcoal and alumina. Stirring was started and ethylene was supplied on demand to maintain 3792 kPa (550 psig). Under these conditions, the polyethylene produced does not dissolve in the isobutane, but remains in slurry form. The reaction was allowed to proceed at 109°C until about 4000 grams of resin were made per gram of catalyst. All reactions were terminated by venting off isobutane and excess ethylene from the reactor.

All results and polymerization conditions are given in the attached table. The Melt Index of the final resin was determined using ASTM Proc. D1238-79, Cond. E, Procedure A for MI<1, and Procedure B for MI>1.

**Table 1**

| Catalyst | Activation Temperature | | Catalyst Amount (g) | Melt Index |
|---|---|---|---|---|
| | °F | °C | | |
| Ex.1 | 1500 | 816 | 0.0469 | 5.1 |
| Ex.1 | 1500 | 816 | 0.0531 | 4.6 |
| Ex.2 | 1600 | 871 | 0.0347 | 5.9 |
| Ex.2 | 1500 | 816 | 0.0305 | 5.4 |
| Ex.2 | 1500 | 816 | 0.0605 | 5.9 |

## Claims

1. A catalyst composition suitable for polymerization of olefins, said catalyst consisting essentially of
(a) an amorphous silica gel support having a pore volume of 1.9-2.9 cc/g, a surface area of 250-900 m²/g, and at least 95% of the surface area is in pores having a pore size between 150-450 Å, and
(b) a chromium compound
and wherein said catalyst, when activated at a temperature of 816°C (1500°F), is capable of yielding a polyethylene having (1) a melt flow index of at least 4.0 in a slurry polymerization process carried out at 109°C and under a pressure of 3729 kPa (550 psig) wherein said catalyst composition is the only catalyst employed
said catalyst being obtainable by a process comprising:
(a) combining an alkali metal silicate solution and a mineral acid to form a mixture having pH of 6-10 and a silica content of 16-21 wt.% and maintaining said mixture at a temperature of 10-20°C,
(b) forming said mixture into gelled beads within 3 seconds from when the mixture is formed,
(c) washing said gelled beads in an aqueous bath at pH = 3-6 for 15-30 hours.,
(d) aging said beads in an alkaline bath of pH = 8-10 for 5-25 hours,
(e) immersing said washed aged beads in an organic solvent suitable for azeotropic distillation and removing water from said beads by azeotropic distillation, and
(f) drying said beads, wherein a chromium compound is added to said beads before or during step (e) or aftor step (f).

2. The catalyst of claim 1 wherein said chromium is present in at 0.4-2.0 wt.% Cr based on the dry weight of the silica.

3. The catalyst of claim 1 wherein said catalyst is capable of producing a polyolefin having a melt flow index of at least 5.0.

4. The catalyst of claim 1 wherein said silica has an average pore diameter of 250-500 Å.

5. The catalyst of claim 1 wherein 50-70% of the pores have a pore size of 250-350 Å.

6. A process for manufacture of a chromium-containing silica catalyst, said process comprising sequentially, the following steps:
(a) combining an alkali metal silicate solution and a mineral acid to form a mixture having pH of 6-10 and a silica content of 16-21 wt.% and maintaining said mixture at a temperature of 10-20°C,
(b) forming said mixture into gelled beads within 3 seconds from when the mixture is formed,
(c) washing said gelled beads in an aqueous bath at pH = 3-6 for 15-30 hours.,
(d) aging said beads in an alkaline bath of pH = 8-10 for 5-25 hours,
(e) immersing said washed aged beads in an organic solvent suitable for azeotropic distillation and removing water from said beads by azeotropic distillation, and
(f) drying said beads, wherein a chromium compound is added to said beads before or during step (e) or after step (f).

7. The process of claim 6 wherein said dried beads are activated by calcination.

8. The process of claim 6 or 7 wherein said beads are formed in step (b) by ejecting said mixture into air.

9. The process of claim 8 wherein said gelation takes place while said beads are in the air.

10. The process of claim 8 or 9 wherein said gelation takes place in less than 0.5 seconds.

11. The process of any one of claims 6 to 10 wherein said mixture is formed in step (a) using in-line mixing.

12. The process of any one of claims 6 to 11 wherein said beads are aged in a solution of ammonium hydroxide.

13. The process of any one of claims 6 to 12 wherein said organic solvent comprises an alcohol.

14. The process of claim 13 wherein said azeotropic distillation takes place at 95-170°C.

15. The process of any one of claims 6 to 14 wherein said alkali metal silicate comprises sodium silicate and said mineral acid comprises sulfuric acid.

16. A method of forming a polyolefin having a melt index of at least 4, said method comprising:
(a) reacting an olefin monomer in the presence of a catalyst as claimed in any one of claims 1 to 5 or as produced in any one of claims 6 to 15, and
(b) recovering said polymer.

## Patentansprüche

1. Katalysatorzusammensetzung, die für die Polymerisation von Olefinen geeignet ist, wobei der Katalysator im Wesentlichen aus
(a) einem amorphen Kieselgelträger mit einem Porenvolumen von 1,9 bis 2,9 cm³/g, einer Oberfläche von 250 bis 900 m²/g, wobei mindestens 95 % der Oberfläche in Poren mit einer Porengröße zwischen 150 bis 450 Å vorliegt, und
(b) einer Chromverbindung besteht,
und wobei der Katalysator, wenn er bei einer Temperatur von 816 °C (1500 °F) aktiviert worden ist, in der Lage ist, ein Polyethylen mit (1) einem Schmelzflussindex von mindestens 4,0 in einem Aufschlämmungspolymerisationsverfahren zu liefern, das bei 109 °C und unter einem Überdruck von 3729 kPa (550 psig) durchgeführt worden ist, wobei die Katalysatorzusammensetzung der einzige verwendete Katalysator ist und der Katalysator nach einem Verfahren herstellbar ist, das umfasst:
(a) das Kombinieren einer Alkalimetallsilikatlösung und einer Mineralsäure zur Bildung einer Mischung mit einem pH-Wert von 6 bis 10 und einem Siliciumdioxidgehalt von 16 bis 21 Gew.-%, und das Halten der Mischung bei einer Temperatur von 10 bis 20 °C,
(b) das Bilden von gelierten Perlen aus dieser Mischung innerhalb von 3 Sekunden ab der Bildung der Mischung, und
(c) das Waschen der gelierten Perlen in einem wässrigen Bad bei einem pH-Wert von 3 bis 6 für 15 bis 30 Stunden,
(d) das Altern der Perlen in einem alkalischen Bad bei einem pH-Wert von 8 bis 10 für 5 bis 25 Stunden,
(e) das Eintauchen der gewaschenen gealterten Perlen in einem organischen Lösungsmittel, das zur Azeotropendestillation geeignet ist, und das Entfernen von Wasser aus den Perlen durch azeotrope Destillation, und
(f) das Trocknen der Perlen, wobei eine Chromverbindung zu den Perlen vor oder während Schritt (e) oder im Anschluss an Schritt (f) zugesetzt wird.

2. Katalysator nach Anspruch 1, bei dem das Chrom mit etwa 0,4 bis 2,0 Gew.-% Chrom, bezogen auf das Trockengewicht des Siliciumdioxids, vorhanden ist.

3. Katalysator nach Anspruch 1, bei dem der Katalysator in der Lage ist, ein Polyolefin mit einem Schmelzflussindex von mindestens 5,0 zu erzeugen.

4. Katalysator nach Anspruch 1, bei dem das Siliciumdioxid einen durchschnittlichen Porendurchmesser von 250 bis 500 Å aufweist.

5. Katalysator nach Anspruch 1, bei dem 50 bis 70 % der Poren eine Porengröße von 250 bis 350 Å aufweisen.

6. Verfahren zur Herstellung eines Chrom enthaltenden Siliciumdioxidkatalysators, wobei das Verfahren sequentiell die folgenden Schritte umfasst:
(a) das Kombinieren einer Alkalimetallsilikatlösung und einer Mineralsäure zur Bildung einer Mischung mit einem pH-Wert von 6 bis 10 und einem Siliciumdioxidgehalt von 16 bis 21 Gew.-%, und das Halten der Mischung bei einer Temperatur von 10 bis 20 °C,
(b) das Bilden von gelierten Perlen aus dieser Mischung innerhalb von 3 Sekunden ab der Bildung der Mischung, und
(c) das Waschen der gelierten Perlen in einem wässrigen Bad bei einem pH-Wert von 3 bis 6 für 15 bis 30 Stunden,
(d) das Altern der Perlen in einem alkalischen Bad bei einem pH-Wert von 8 bis 10 für 5 bis 25 Stunden,
(e) das Eintauchen der gewaschenen gealterten Perlen in einem organischen Lösungsmittel, das zur Azeotropendestillation geeignet ist, und das Entfernen von Wasser aus den Perlen durch azeotrope Destillation, und
(f) das Trocknen der Perlen, wobei eine Chromverbindung zu den Perlen vor oder während Schritt (e) oder im Anschluss an Schritt (f) zugesetzt wird.

7. Verfahren nach Anspruch 6, bei dem die getrockneten Perlen durch Calcinierung aktiviert werden.

8. Verfahren nach Anspruch 6 oder 7, bei dem die Perlen in Schritt (b) durch Ausstoßen der Mischung in die Luft gebildet werden.

9. Verfahren nach Anspruch 8, bei dem die Gelierung erfolgt, während die Perlen in der Luft sind.

10. Verfahren nach Anspruch 8 oder 9, bei dem die Gelierung in weniger als 0,5 Sekunden erfolgt.

11. Verfahren nach einem der Ansprüche 6 bis 10, bei dem die Mischung in Schritt (a) unter Verwendung einer in-line-Mischung gebildet wird.

12. Verfahren nach einem der Ansprüche 6 bis 11, bei dem die Perlen in einer Lösung von Ammoniumhydroxid gealtert werden.

13. Verfahren nach einem der Ansprüche 6 bis 12, bei dem das organische Lösungsmittel einen Alkohol umfasst.

14. Verfahren nach Anspruch 13, bei dem die azeotrope Destillation bei 95 bis 170 °C erfolgt.

15. Verfahren nach einem der Ansprüche 6 bis 14, bei dem das Alkalimetallsilikat Natriumsilikat umfasst und die Mineralsäure Schwefelsäure umfasst.

16. Verfahren zur Bildung eines Polyolefins mit einem Schmelzindex von mindestens 4, wobei das Verfahren umfasst:
(a) Umsetzung eines Olefinmonomers in Gegenwart eines Katalysators gemäß einem der Ansprüche 1 bis 5 oder hergestellt gemäß einem der Ansprüche 6 bis 15,
und
(b) Gewinnung des Polymers.

## Revendications

1. Composition da catalyseur appropriée pour la polymérisation des oléfines, ledit catalyseur consistant essentiellement en
(a) un support de gel de silice amorphe ayant un volume des pores de 1,9-2,9 cc/g, une aire superficielle de 250-900 m²/g, et au moins 95% de l'aire superficielle est dans des pores ayant une dimension des pores entre 150-450 Å, et
(b) un composé de chrome
et où ledit catalyseur, quand il est activé à une température de 816°C (1500°F), est capable de donner un polyéthylène ayant (1) un indice d'écoulement en phase fondue d'au moins 4,0 dans un procédé de polymérisation en bouillie effectué à 109°C et sous une pression de 3729 kPa (550 psig) où ladite composition de catalyseur est le seul catalyseur employé
ledit catalyseur pouvant être obtenu par un procédé comprenant :
(a) la combinaison d'une solution d'un silicate d'un métal alcalin et d'un acide minéral pour former un mélange ayant un pH de 6-10 et une teneur en silice de 16-21% en poids et le maintien dudit mélange à une température de 10-20°C,
(b) la formation dudit mélange en perles gélifiées dans les 3 secondes à partir du moment où le mélange est formé,
(c) le lavage desdites perles gélifiées dans un bain aqueux à pH = 3-6 pendant 15-30 heures,
(d) le vieillissement desdites perles dans un bain alcalin de pH = 8-10 pendant 5-25 heures,
(e) l'immersion desdites perles vieillies lavées dans un solvant organique approprié pour une distillation azéotropique et l'enlèvement de l'eau desdites perles par distillation azéotropique, et
(f) le séchage desdites perles, où un composé de chrome est ajouté auxdites perles avant ou pendant l'étape (e) ou après l'étape (f).

2. Catalyseur de la revendication 1 où ledit chrome est présent à 0,4-2,0% en poids de Cr en se basant sur poids sec de la silice.

3. Catalyseur de la revendication 1 où ledit catalyseur est capable de produire une polyoléfine ayant un indice d'écoulement en phase fondue d'au moins 5,0.

4. Catalyseur de la revendication 1 où ladite silice a un diamètre moyen des pores de 250-500 Å

5. Catalyseur de la revendication 1 où 50-70% des pores ont une dimension des pores de 250-350 Å.

6. Procédé de fabrication d'un catalyseur de silice contenant du chrome, ledit procédé comprenant séquentiellement les étapes suivantes :
(a) combiner une solution d'un silicate d'un métal alcalin et un acide minéral pour former un mélange ayant un pH de 6-10 et une teneur en silice de 16-21% en poids et maintenir ledit mélange à une température de 10-20°C,
(b) former ledit mélange en perles gélifiées dans les 3 secondes à partir du moment où le mélange est formé,
(c) laver lesdites perles gélifiées dans un bain aqueux à pH = 3-6 pendant 15 30 heures,
(d) vieillir lesdites perles dans un bain alcalin de pH = 8-10 pendant 5-25 heures,
(e) immerger lesdites perles vieillies lavées dans un solvant organique approprié à une distillation azéotropique et enlever l'eau desdites perles par distillation azéotropique, et
(f) sécher lesdites perles, où un composé de chrome est ajouté auxdites perles avant ou pendant l'étape (e) ou après l'étape (f)

7. Procédé de la revendication 6 où lesdites perles séchées sont activées par calcination.

8. Procédé de la revendication 6 ou 7 où lesdites perles sont formées à l'étape (b) par éjection dudit mélange dans l'air.

9. Procédé de la revendication 8 où ladite gélification a lieu alors que lesdites perles sont dans l'air.

10. Procédé de la revendication 8 ou 9 où ladite gélification a lieu en moins de 0,5 seconde.

11. Procédé de l'une quelconque des revendications 6 à 10 où ledit mélange est formé à 'étape (a) en utilisant un mélange en ligne.

12. Procédé de l'une quelconque des revendications 6 à 11 où lesdites perles sont vieillies dans une solution d'hydroxyde d'ammonium.

13. Procédé de l'une quelconque des revendications 6 à 12 où ledit solvant organique comprend un alcool.

14. Procédé de la revendication 13 ou ladite distillation azéotropique a lieu à 95-170°C.

15. Procédé de l'une quelconque des revendications 6 à 14 où ledit silicate d'un métal alcalin comprend du silicate de sodium et ledit acide minéral comprend de l'acide sulfurique.

16. Méthode de formation d'une polyoléfine ayant un indice en phase fondue d'au moins 4, ladite méthode. comprenant :
(a) la réaction d'un monomère d'oléfine en présence d'un catalyseur selon l'une quelconque des revendications 1 à 15 ou tel que produit dans l'une quelconque des revendications 6 à 15. et
(b) la récupération dudit polymère.
